# EUROPEAN PATENT SPECIFICATION

(11) **EP 4 242 996 B1**
(45) Date of publication and mention of the grant of the patent: **01.07.2026**
(21) Application number: 21888979.8
(22) Date of filing: 08.10.2021
(51) Int. Cl.: G08G 1/00, G08G 1/16

(54) **STATUS DETERMINATION DEVICE, STATUS DETERMINATION SYSTEM, AND STATUS DETERMINATION METHOD**
STATUSBESTIMMUNGSVORRICHTUNG, STATUSBESTIMMUNGSSYSTEM UND STATUSBESTIMMUNGSVERFAHREN
DISPOSITIF, SYSTÈME ET PROCÉDÉ DE DÉTERMINATION D'ÉTAT

(30) Priority: 04.11.2020 JP 2020184282
(43) Date of publication of application: 13.09.2023
(73) Proprietor: Hitachi, Ltd., Tokyo 100-8280 (JP)
(72) Inventor: KITAMURA Shogo, Tokyo 100-8280 (JP); YOSHIDA Daisuke, Tokyo 100-8280 (JP)
(74) Representative: Mewburn Ellis LLP
(86) International application number: PCT/JP2021/037487
(87) International publication number: WO 2022/097426

(56) References cited:
- JP-A- 2017 102 838
- JP-A- 2019 211 900
- JP-A- 2020 021 326
- JP-A- 2021 047 120
- US-A1- 2020 042 803

## Description

### Incorporation by Reference

The present application claims priority from Japanese Patent Application No. 2020-184282 filed on November 4, 2020.

### Technical Field

The present invention relates to a state determination device.

### Background Art

As a background art of the technical field, there is JP2020-107174A (PTL 1). PTL 1 discloses that "A pallet is an object to be transported by a transport device and includes a specific portion. Markers are attached to predetermined positions on the pallet during learning.", and that "A computer includes a processor, and during learning, the processor detects the positions of the markers from second image data based on first image data, cuts out, as labeled training data, a portion including the specific portion of the pallet from the second image data, performs machine learning using the labeled training data, and generates information necessary for an identifier.".
US 2020/042803 A1 discloses an information processing method, information processing apparatus and recording medium.

### Summary of Invention

### Technical Problem

As a main application of a state determination device and a state determination method, for example, there is a facility inspection system that is mounted on a moving body and inspects a facility such as a sign using a captured image of a periphery thereof. In order to construct the present system using object detection based on a machine learning technique such as deep learning, an enormous number of man-hours may be required to create labeled training information.

In the technique described in JP2020-107174A, the pallet is the object to be transported by the transport device and includes the specific portion. The markers are attached to the predetermined positions on the pallet during learning. In addition, the computer includes the processor, and during learning, the processor detects the positions of the markers from the second image data based on the first image data, cuts out, as the labeled training data, the portion including the specific portion of the pallet from the second image data, performs the machine learning using the labeled training data, and generates the information necessary for the identifier. However, even when the technique described in JP2020-107174A is applied to a known facility inspection system, an enormous number of man-hours are required to attach markers to an existing facility in a wide range, and thus there is room for improvement.

An object of the present invention is to provide a state determination device and a state determination method for automatically creating labeled training information, to be used for object detection, by specifying a region matching with dimension data of a facility based on three-dimensional data of a periphery of a traveling space.

### Solution to Problem

The invention is set out in the appended claims. A representative example of the invention disclosed in the present application is as follows. That is, a state determination device includes: a first sensor mounted on a moving body and configured to capture an image of a periphery of a traveling space; a second sensor mounted on the moving body and configured to acquire three-dimensional data of the periphery of the traveling space; a facility database configured to store dimension data of one or more types of facilities to be inspected; a labeled training information creation unit configured to specify a region matching with the dimension data from the three-dimensional data and create labeled training information based on the image and the three-dimensional data in the specified region; an object detection unit configured to input the captured image to an object detection model and output a name and a region of each of the facilities to be inspected; and a learning unit configured to learn, using the image and the three-dimensional data in the specified region, an internal parameter of the object detection model such that an output result of the object detection unit approaches the labeled training information.

### Advantageous Effects of Invention

According to one aspect of the present invention, the labeled training information to be used for object detection can be automatically created. Problems, configurations, and effects other than those described above will be clarified with the following description of embodiments.

### Brief Description of Drawings

[FIG. 1(a)] FIG. 1(a) is a diagram illustrating an overall configuration in a learning phase of a facility inspection system according to Embodiment 1 of the present invention.
[FIG. 1(b)] FIG. 1(b) is a diagram illustrating an overall configuration in an operation phase of the facility inspection system according to Embodiment 1 of the present invention.
[FIG. 2(a)] FIG. 2(a) is a diagram illustrating an image acquired in the learning phase of the facility inspection system according to Embodiment 1 of the present invention.
[FIG. 2(b)] FIG. 2(b) is a diagram illustrating three-dimensional data acquired in the learning phase of the facility inspection system according to Embodiment 1 of the present invention.
[FIG. 2(c)] FIG. 2(c) is a diagram illustrating labeled training information created in the learning phase of the facility inspection system according to Embodiment 1 of the present invention.
[FIG. 3] FIG. 3 is a diagram illustrating an operation of the facility inspection system according to Embodiment 1 of the present invention when the labeled training information is created for a facility to be inspected disposed at a curve.
[FIG. 4(a)] FIG. 4(a) is a diagram illustrating an object detection result in a state immediately after the start of training of an object detection unit in the facility inspection system according to Embodiment 1 of the present invention.
[FIG. 4(b)] FIG. 4(b) is a diagram illustrating an object detection result in a state after training of the object detection unit progresses in the facility inspection system according to Embodiment 1 of the present invention.
[FIG. 5] FIG. 5 is a flowchart illustrating an example of an internal process in the facility inspection system according to Embodiment 1 of the present invention.
[FIG. 6] FIG. 6 is a diagram illustrating an overall configuration of a facility inspection system according to Embodiment 2 of the present invention.
[FIG. 7] FIG. 7 is a diagram illustrating an overall configuration of a facility inspection system according to Embodiment 3 of the present invention.
[FIG. 8] FIG. 8 is a diagram illustrating an overall configuration of a facility inspection system according to Embodiment 4 of the present invention.
[FIG. 9] FIG. 9 is a diagram illustrating an overall configuration of a facility inspection system according to Embodiment 5 of the present invention.

### Description of Embodiments

Embodiments of the present invention will be described below with reference to the drawings.

### <Embodiment 1>

In the present embodiment, a facility inspection system which is a main application of a state determination device, a state determination system, and a state determination method of the present invention will be described. An object of the facility inspection system is to inspect the presence or absence of dirt, damage, or the like in a facility such as a sign using a captured image of a periphery of a moving body.

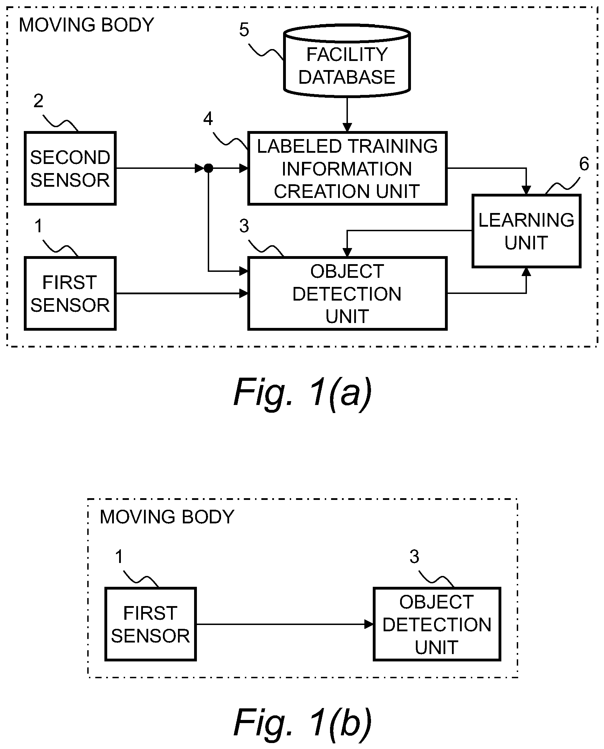

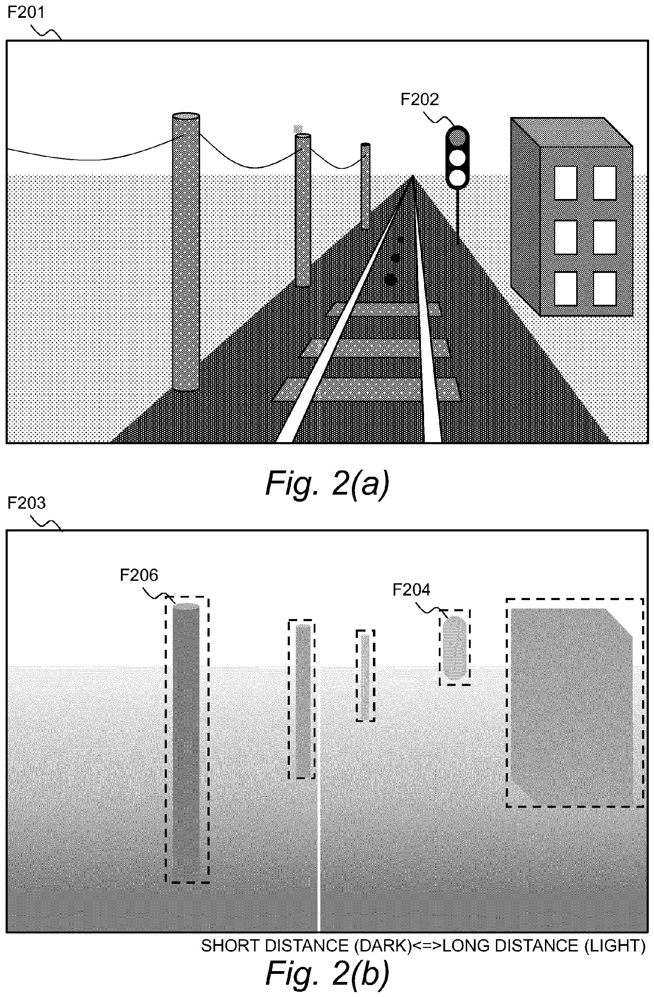

FIGS. 1(a) and 1(b) are diagrams illustrating an overall configuration of the facility inspection system according to Embodiment 1 of the present invention, and FIGS. 2(a) to 4(b) are schematic diagrams illustrating an operation of the facility inspection system according to Embodiment 1 of the present invention. In the present embodiment, the facility inspection system will be described in which labeled training information to be used for object detection is automatically created by acquiring three-dimensional data of a periphery of a traveling space and specifying a region matching with dimension data of a facility from the three-dimensional data while capturing a training image for object detection. In the present embodiment, the traveling space is a range in which the moving body (for example, a train or an automobile) can travel, and a facility to be inspected is disposed around an outside of the traveling space.

### [System Configuration]

A configuration and an operation of the facility inspection system according to Embodiment 1 of the present invention will be described. As shown in FIG. 1(a), the facility inspection system of the present embodiment includes a first sensor 1, a second sensor 2, an object detection unit 3, a labeled training information creation unit 4, a facility database 5, and a learning unit 6. The first sensor 1 is a device such as a camera that acquires an image. The second sensor 2 is a device such as a lidar, a millimeter wave radar, and a stereo camera that acquires spatial three-dimensional data. The lidar is characterized in that highly accurate point cloud data can be acquired, the millimeter wave radar is characterized in that point cloud data with a low decomposition ability can be acquired regardless of a surrounding environment, and the stereo camera is characterized in that a distance image can be obtained at a low cost. The first sensor 1 and the second sensor 2 are synchronized and acquire data at the same timing. The facility database 5 stores actual dimension data of the facility to be inspected. The facility database 5 may store data on a position or a height at which the facility to be inspected is disposed. The facility to be inspected is not limited to one type, and may be of a plurality of types. The dimension data stored in the facility database 5, and an upper limit value and a lower limit value of a dimension of the facility to be inspected may be used, or an error range that may occur between a design value and recognition of the facility to be inspected may be used. The error range may hold different values for each sensor.

In the facility inspection system, in a learning phase, all the components are active as shown in FIG. 1(a), and in an operation phase after completion of learning, the first sensor 1 and the object detection unit 3 are active as shown in FIG. 1(b). In the operation phase, by grasping a state of the periphery of the moving body using only the first sensor 1, the present system after completion of learning can be mounted on many moving bodies while reducing a cost, thereby enabling facility inspection over a wide area.

An operation in the learning phase will be described with reference to FIG. 1(a). First, the first sensor 1 captures an image of a state of the periphery of the moving body and acquires the image. The second sensor 2 acquires three-dimensional data of the periphery of the moving body. At this time, when the three-dimensional data is point cloud data, for example, the three-dimensional data may be appropriately converted into a distance image that matches with the image in a capturing direction and an angle of view. In addition, the three-dimensional data is prepared such that correspondence between a subject in the image and the three-dimensional data can be obtained. The labeled training information creation unit 4 reads the facility database 5 and specifies a region matching with the dimension data of the facility from the three-dimensional data. Then, the specified region is converted into a coordinate system in the captured image. Then, a name of the facility and information on the specified region are output as labeled training information to be used for object detection in the captured image. The object detection unit 3 includes an object detection model such as a deep neural network (DNN) therein, receives the captured image and the three-dimensional data, and outputs a name and a region of the facility to be inspected as a detection result. The learning unit 6 updates an internal parameter of the object detection model so as to reduce a difference between the output labeled training information and the detection result, that is, to increase a detection accuracy (accuracy of identifying the facility name and accuracy of specifying the region) of the object detection unit 3. The accuracy of specifying the region can be calculated using, for example, an intersection over union (IoU).

The learning unit 6 may update the internal parameter using the image and the labeled training information as a pair. Alternatively, the learning unit 6 may update the internal parameter using a predetermined number of pieces of labeled training information stored in a labeled training information buffer and a predetermined number of captured images stored in an image buffer. By learning using a plurality of images, more general-purpose image features can be learned.

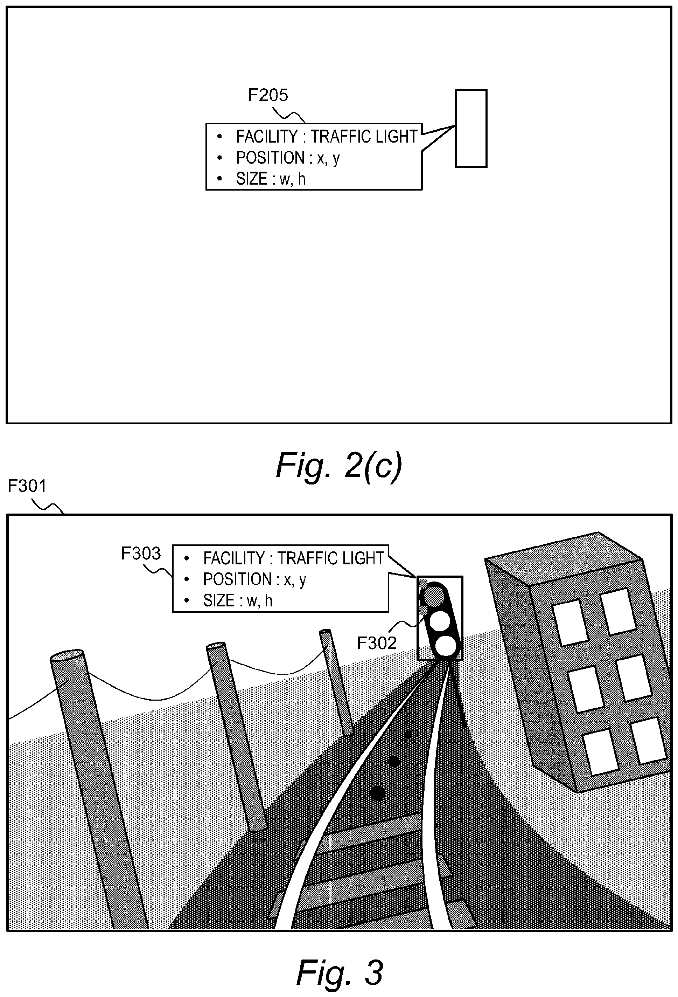

FIGS. 2(a) to 2(c) are schematic diagrams illustrating the operation in the learning phase of the facility inspection system according to an embodiment of the present invention. An image F201 captured by the first sensor 1 shows a traffic light F202 to be inspected, as shown in FIG. 2(a). At this time, in three-dimensional data (distance image) F203 acquired at the same timing, as shown in FIG. 2(b), there is a region F204 matching with a dimension of a traffic light read from the facility database 5. Labeled training information F205 (see FIG. 2(c)) of the object detection unit 3 is created by finding out the region F204 matching with a dimension of a traffic light by searching.

An example of the method for searching for the region F204 matching with a dimension of a traffic light will be described. First, in the three-dimensional data (distance image) F203, a facility candidate region group F206 having a predetermined size at a position above the ground surface is calculated. Then, when a region satisfying a lower limit and an upper limit of the dimension of the facility to be searched for which are read from the facility database 5 is extracted from the facility candidate region group F206, the region F204 matching with a dimension of a traffic light can be specified. When a condition related to a arrangement position such as a height at which the facility to be searched for is disposed is recorded in the facility database 5, in a step of calculating the facility candidate region group F206 or in a step of specifying the region F204 matching with a dimension of a traffic light, erroneous specifications can be reduced by performing a filtering process according to the condition of the arrangement position.

When the stereo camera is used as the second sensor 2, a distance image is obtained as three-dimensional data by calculating a parallax at each pixel position between left and right captured images. On the other hand, when the lidar and the millimeter wave radar are used as the second sensor 2, discrete point cloud data forming a space is obtained as three-dimensional data. FIGS. 2(b) and 2(c) show a state of searching for a traffic light in the distance image, but the region matching with a dimension of a traffic light may be found by searching in a point cloud state, and then converted into a coordinate system in the image captured by the first sensor 1.

FIG. 3 is a schematic diagram of an operation when the labeled training information of the facility to be inspected and disposed at a curve is created. Since a sharp curve has a large cant, an image or three-dimensional data is acquired in an inclined state. Therefore, the labeled training information is created in consideration of influence of the inclination. As information on the inclination, for example, a gyro sensor mounted on the moving body or design values of a track to be laid can be used. When searching for the region matching with a dimension of a traffic light, for example, the search is performed by adjusting the lower limit and the upper limit of the dimension to be searched for (a dimension in a horizontal direction is increased and a dimension in a vertical direction is decreased) in consideration of the influence of the inclination. Alternatively, the search may be performed after correcting the inclination of the entire three-dimensional data so as to match with an actual arrangement situation of a traffic light F302. After the search, labeled training information F303 is created based on a search result and inclination information so as to include the traffic light F302 in an image F301 captured by the first sensor 1.

For example, when the moving body is a streetcar, since a traveling space of the streetcar may be adjacent to or overlap with a traveling space of an automobile, various objects such as an automobile or a two-wheeled vehicle are reflected in the first sensor 1 and the second sensor 2. Therefore, when a facility to be inspected is searched for using dimension data, for example, a detection unit that detects the automobile or the two-wheeled vehicle based on the image is separately provided, and filtering is performed on the three-dimensional data so as to exclude, from a search range, a position at which the automobile or the two-wheeled vehicle is detected, thereby reducing erroneous determinations of specifying these objects as a facility to be inspected.

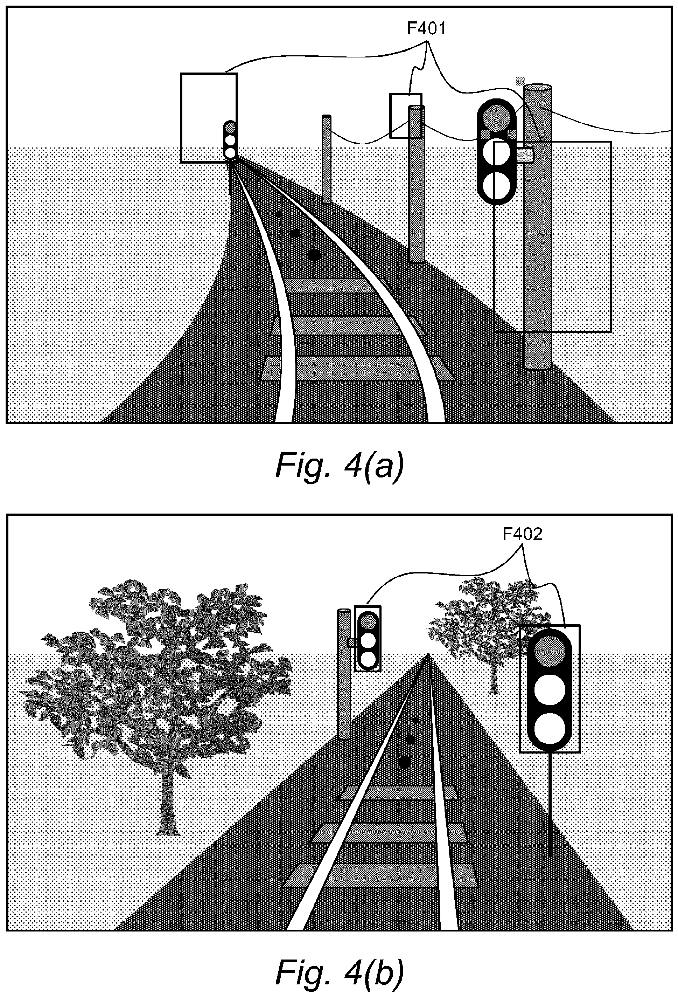

FIG. 4(a) is a schematic diagram illustrating an object detection result in a state immediately after the start of training of the object detection unit 3, and FIG. 4(b) is a schematic diagram illustrating an object detection result in a state after training of the object detection unit 3 progresses. As shown in FIG. 4(a), since image features of the traffic light cannot be suitably captured immediately after the start of training of the object detection unit 3, a detection result F401 immediately after the start of training includes erroneous detection indicating places at which no traffic light is present and non-detection in which the traffic light is missed. Eventually, the learning of the image features of the traffic lights progress, and as shown in FIG. 4(b), a detection result F402 after the learning progresses indicates that a position or a size of the traffic light can be suitably estimated. In the facility inspection system of the present invention, it is possible to automatically create the labeled training information and train the object detection unit 3 in a process during which the moving body travels.

An object detection performance can be improved by using the three-dimensional data acquired by the second sensor 2 when training the object detection model for detecting the facility to be inspected from the image acquired by the first sensor 1. A first example of a learning method is a method of treating both the image and the three-dimensional data as input data and learning the labeled training information associated with the input data. That is, an object detection task for estimating a name and a region of the facility to be inspected is trained based on both the three-dimensional data and the image, and knowledge acquired through the object detection task based on the three-dimensional data is utilized for detecting an object from the image. In the first example, an accuracy of detecting an object from the image can be improved by embedding knowledge that cannot be acquired based on only an image in the object detection model. A second example of the learning method is a method of learning by treating the image as input data and the three-dimensional data as labeled training information different from that used for object detection. That is, the object detection task based on the image and a distance estimation task for estimating distance information to an object based on the image are simultaneously trained. In the second example, an accuracy of the object detection task itself can be improved by solving multiple different tasks at the same time and promoting the acquisition of a latent knowledge common to the multiple tasks.

An operation in the operation phase will be described with reference to FIG. 1(b). First, the first sensor 1 captures an image of a state of the periphery of the moving body and acquires the image. Then, the trained object detection unit 3 receives the image acquired by the first sensor 1 and outputs a name and a region of a facility to be inspected as a detection result.

As an example of a method of confirming a reliability of an operation of the object detection unit 3, a process of visualizing a detection basis of the object detection model provided in the object detection unit 3 may be added to the object detection unit 3. As a method of visualizing the detection basis, for example, there is a method of highlighting an internal signal of a DNN that greatly contributes to the output of the detection result (for example, highlighting in a heat map representing a degree of reaction). For example, when an object other than the facility to be inspected is erroneously detected in the operation phase, similar erroneous detection of the object can be reduced by visualizing a determination basis of the erroneous detection and additionally learning a scene similar to an erroneous detection scene.

In a subsequent stage of the object detection unit 3, an extraction processing unit may be provided that extracts and stores a facility region detected from the image so as to facilitate subsequent inspection, or an abnormality determination unit may be provided that automatically determines the presence or absence of dirt, damage, or the like.

Both the first sensor 1 and the second sensor 2 are mounted on the moving body and acquire a state of the periphery thereof. When the facility inspection system is used for inspection of a railway sign or the like, the moving body is a railway vehicle. When all of the object detection unit 3, the labeled training information creation unit 4, the facility database 5, and the learning unit 6 are mounted on the moving body, learning can be performed under a suitable condition in which influence of communication delay is small. Depending on convenience of hardware mounting, a part of the configuration (for example, the object detection unit 3, the labeled training information creation unit 4, the facility database 5, and the learning unit 6) may be provided in a facility on the ground such as a data center outside the moving body, and learning may be performed while performing communication.

### [Operation Sequence]

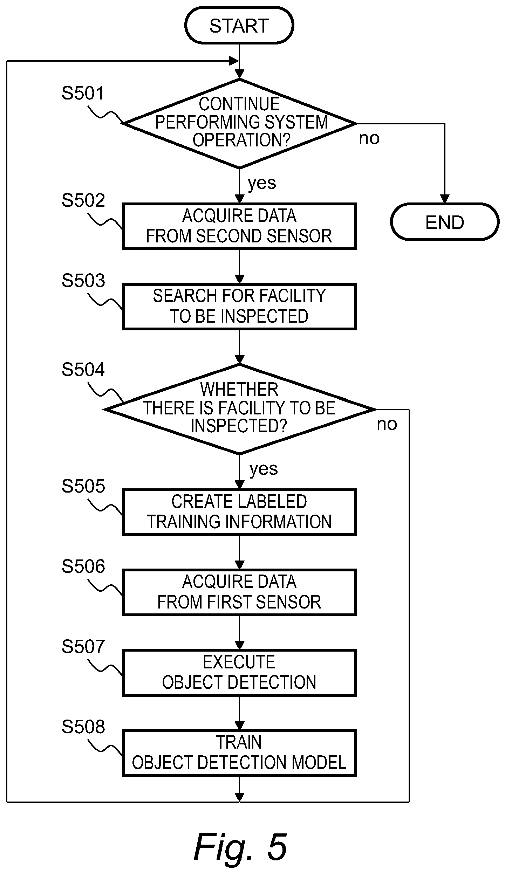

FIG. 5 shows an example of a process flow of the present embodiment. After being operated, the facility inspection system proceeds to a process loop, and in step S501, the presence or absence of an operation end command for the facility inspection system of the present embodiment is monitored in the process loop. When the operation end command is detected, the process ends. On the other hand, when no operation end command can be detected and the operation is continued, in step S502, three-dimensional data of the periphery of the moving body is acquired by the second sensor 2. In step S503, the three-dimensional data is searched for a region matching with dimension data of a facility by referring to the facility database 5. In step S504, it is determined whether there is a facility to be inspected, that is, whether the facility to be inspected is detected by the search. When the facility to be inspected is detected, in step S505, labeled training information to be used for object detection in the image captured by the first sensor 1 is created. Then, in step S506, a captured image of the periphery of the moving body is acquired from the first sensor 1. In step S507, the acquired image is input to the object detection model, and a detection result is output. In step S508, an internal parameter of the object detection model is updated to reduce a difference between the created labeled training information and the output detection result, that is, to improve a detection accuracy of the object detection model.

The process flow shown in FIG. 5 illustrates a method of training the object detection model each time an image is acquired from the first sensor 1, but a labeled training information buffer and an image buffer may be provided, and the internal parameter may be updated using a predetermined number of pieces of labeled training information stored in the labeled training information buffer and a predetermined number of captured images stored in the image buffer. By learning using a plurality of images, more general-purpose image features can be learned.

According to the above process flow, the facility inspection system that continuously performs an internal process of the present embodiment can be implemented.

As described above, in Embodiment 1 of the present invention, by acquiring the three-dimensional data of the periphery of the traveling space and specifying the region matching with the dimension data of the facility from the three-dimensional data while capturing the training image for object detection, it is possible to automatically create the labeled training information to be used by the facility inspection system for object detection.

### <Embodiment 2>

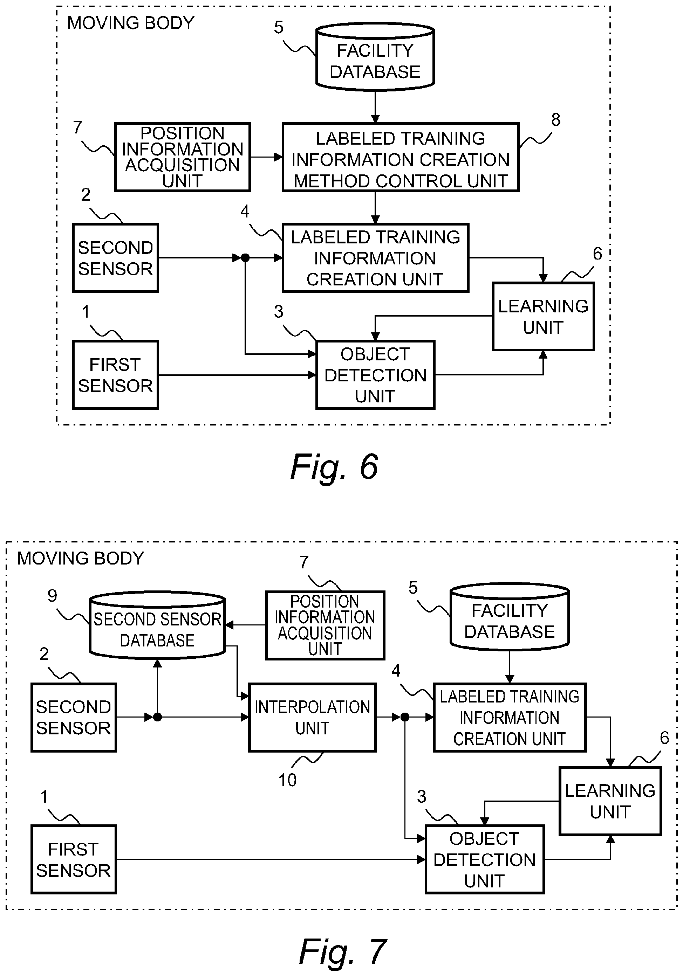

FIG. 6 is a diagram illustrating an overall configuration of a facility inspection system according to Embodiment 2 of the present invention. An object of the present embodiment is to provide a facility inspection system in which labeled training information to be used for object detection is automatically created by acquiring position information of a moving body and specifying a region matching with dimension data of a facility at a current location of the moving body.

### [System Configuration]

A configuration and an operation of the facility inspection system according to Embodiment 2 of the present invention will be described. As illustrated in FIG. 6, the facility inspection system of the present embodiment is implemented by adding a position information acquisition unit 7 and a labeled training information creation method control unit 8 to the configuration shown in FIG. 1(a) of Embodiment 1.

As the position information acquisition unit 7, for example, a GNSS receiver such as a GPS is used. The position information acquisition unit 7 acquires current position information of the moving body. The labeled training information creation method control unit 8 acquires dimension data and arrangement location information of a facility to be inspected from the facility database 5, compares the arrangement location information with the current position information of the moving body acquired by the position information acquisition unit 7, activates the labeled training information creation unit 4 at a timing when the moving body approaches a location at which a facility is present, and supplies the name and the dimension data of the facility to be inspected acquired from the facility database 5 to the labeled training information creation unit 4. The labeled training information creation unit 4 creates labeled training information based on the supplied name and dimension data of the facility to be inspected at a timing when the name and the dimension data of the facility to be inspected are supplied. The learning unit 6 updates an internal parameter of the object detection unit 3 at a timing when the labeled training information is supplied.

When the facility database 5 includes the arrangement location information of the facility to be inspected, the creation of erroneous labeled training information can be reduced by creating the labeled training information only at the timing when the moving body approaches the location at which the facility is present. In particular, when there are a plurality of types of facilities to be inspected and dimension data of the facilities are similar, erroneous detection of the facility can be reduced.

In the configuration shown in FIG. 6, the current position information of the moving body acquired by the position information acquisition unit 7 is supplied only to the labeled training information creation method control unit 8, but for example, the current position information of the moving body acquired by the position information acquisition unit 7 may also be supplied to both the first sensor 1 and the second sensor 2, and the data may be acquired from each sensor only at the timing when the moving body approaches the location at which the facility is present. The power consumption can be reduced by acquiring the sensor data only at a necessary timing.

Alternatively, when the labeled training information creation unit 4 attempts to create the labeled training information at the timing when the moving body approaches the location at which the facility is present, but when the region matching with the dimension data of the facility cannot be specified from the three-dimensional data, a failure in specifying the region may be stored as a log. In this situation, there is a possibility that the facility significantly deviates from a normal arrangement situation, and it is also possible to determine the presence or absence of an abnormality such as a remarkable arrangement defect in a process of the learning phase of the present system in which the learning is performed while the labeled training information for the object detection unit 3 is created.

As described above, according to Embodiment 2 of the present invention, by acquiring the position information of the moving body and specifying the region matching with the dimension data of the facility at the current location of the moving body, the power consumption when the labeled training information to be used by the facility inspection system for object detection is automatically created can be reduced, and the creation of erroneous labeled training information can be reduced.

### <Embodiment 3>

FIG. 7 is a diagram illustrating an overall configuration of a facility inspection system according to Embodiment 3 of the present invention. An object of the present embodiment is to provide a facility inspection system in which three-dimensional data acquired at the current time point is interpolated by using three-dimensional data acquired in the past at the same location, thereby improving a spatial measurement resolution of the periphery of a moving body and automatically creating labeled training information to be used for object detection.

### [System Configuration]

A configuration and an operation of the facility inspection system according to Embodiment 3 of the present invention will be described. As shown in FIG. 7, the facility inspection system of the present embodiment is implemented by adding the position information acquisition unit 7, a second sensor database 9, and an interpolation unit 10 to the configuration shown in FIG. 1(a) of Embodiment 1.

The second sensor database 9 stores three-dimensional data acquired by the second sensor 2 during traveling and position information of the moving body in association with each other, and supplies the three-dimensional data acquired in the past at the same location to the interpolation unit 10. The interpolation unit 10 interpolates the three-dimensional data acquired at the current time point by using the three-dimensional data acquired in the past at the same location, and outputs the interpolated three-dimensional data.

When three-dimensional data is acquired as a discrete point cloud forming a space by using, for example, a lidar or a millimeter wave radar as the second sensor 2, a portion at which no point cloud is present cannot be measured. In particular, since a density of an acquirable point cloud is low when a speed of the moving body is high, the spatial measurement resolution decreases. Therefore, by interpolating the portion at which no point cloud is present by using the three-dimensional data acquired in the past at the same location, the density of the point cloud can be increased and the spatial measurement resolution can be improved. One or more of pieces of past three-dimensional data may be used for interpolation. In addition, the past three-dimensional data used for interpolation may be data at the same time or data at a different time.

In the interpolation of the three-dimensional data, for example, the current point cloud and the past point cloud are matched with each other, or one or both of the point clouds are converted into meshes and then matched with each other, and the three-dimensional data can be interpolated by calculating an alignment parameter in which space structures indicated by both point clouds match each other. In particular, when the moving body is a railway vehicle, since traveling of the railway vehicle is limited to a track, three-dimensional data under approximate conditions can be repeatedly acquired, a large amount of three-dimensional data to be used for interpolation can be held, and the spatial measurement resolution can be efficiently improved. Accordingly, an accuracy of specifying a region matching with dimension data of a facility at a current location of the moving body can be increased, and omissions and mistakes in creating the labeled training information can be reduced.

As described above, in Embodiment 3 of the present invention, by interpolating the three-dimensional data acquired at the current time point by using the three-dimensional data acquired in the past at the same location, it is possible to improve the spatial measurement resolution of the periphery of the moving body when the labeled training information to be used for object detection is automatically created.

### <Embodiment 4>

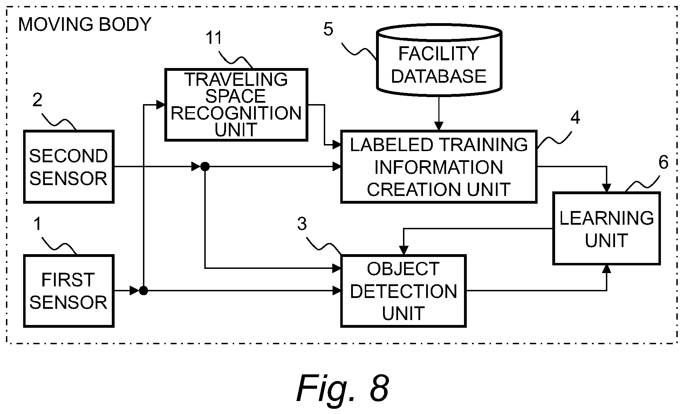

FIG. 8 is a diagram illustrating an overall configuration of a facility inspection system according to Embodiment 4 of the present invention. An object of the present embodiment is to provide a facility inspection system in which a traveling space of a moving body is recognized from an image, a region in three-dimensional data at which a facility to be inspected may be present is limited based on the recognized traveling space, and labeled training information to be used for object detection is automatically created.

### [System Configuration]

A configuration and an operation of the facility inspection system according to Embodiment 4 of the present invention will be described. As shown in FIG. 8, the facility inspection system of the present embodiment is implemented by adding a traveling space recognition unit 11 to the configuration shown in FIG. 1(a) of Embodiment 1.

The traveling space recognition unit 11 recognizes a traveling space of the moving body from an image acquired by the first sensor 1, calculates a region at which a facility to be inspected may be present at the periphery of the recognized traveling space, and supplies information on the calculated region to the labeled training information creation unit 4. For the region at which the facility to be inspected may be present, an outer periphery of the traveling space may be set as one region, different ranges at the top, bottom, left, and right of the traveling space may be set, ranges different for each traveling section may be set, and ranges different for each facility to be inspected may be set. The labeled training information creation unit 4 reads the facility database 5, and specifies, in the three-dimensional data acquired by the second sensor 2, a region matching with dimension data of a facility from the region at which the facility to be inspected may be present.

For example, if the moving body is an automobile, the traveling space recognized by the traveling space recognition unit 11 can be estimated to be between white lines detected on the left and right sides based on white lines (lane marks or the like) detected in the image. Alternatively, for example, if the moving body is a railway vehicle, a track can be detected in the image, and the traveling space can be estimated to be a predetermined region in an upward direction and right and left directions from a position of the track based on the detected track.

The facility to be inspected is disposed outside the traveling space, instead of being in the traveling space in which the moving body travels. Therefore, when the labeled training information creation unit 4 specifies a region matching with dimension data of a facility from the three-dimensional data, by limiting a search range to the outside of the traveling space, a process time required for the search can be shortened, and erroneous detection of the facility to be inspected in the traveling space can be reduced.

As described above, according to Embodiment 4 of the present invention, the traveling space of the moving body is recognized based on the image, the region in the three-dimensional data at which the facility to be inspected may be present is limited based on the traveling space, the process time when the labeled training information to be used for object detection is automatically created can be shortened, and the creation of erroneous labeled training information can be reduced.

### <Embodiment 5>

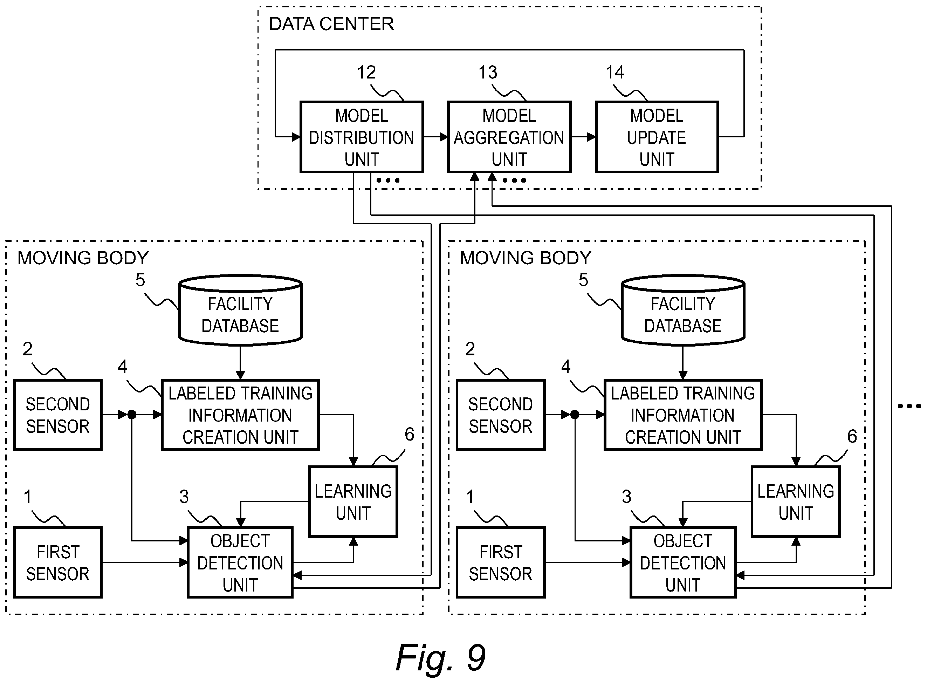

FIG. 9 is a diagram illustrating an overall configuration of a facility inspection system according to Embodiment 5 of the present invention. An object of the present embodiment is to provide a facility inspection system in which a plurality of moving bodies are connected to a data center in an edge cloud configuration, common object detection models are distributed to the plurality of moving bodies to perform training, and training results are aggregated to update the common object detection models.

### [System Configuration]

A configuration and an operation of the facility inspection system according to Embodiment 5 of the present invention will be described. As illustrated in FIG. 9, the facility inspection system of the present embodiment is implemented by adding a model distribution unit 12, a model aggregation unit 13, and a model update unit 14 to the configuration shown in FIG. 1(a) of Embodiment 1.

The model distribution unit 12 distributes the commonly used object detection models to the object detection units 3 of the plurality of moving bodies. In each of the moving bodies, labeled training information for the object detection unit 3 is created in any of the configurations described in Embodiments 1 to 4, the object detection model is trained, and the trained object detection models updated by the model aggregation unit 13 are aggregated into the data center. The object detection models to be aggregated may be all of the object detection models or only differences generated due to the update. By aggregating only the differences, an amount of data to be transmitted can be reduced. The model update unit 14 updates the commonly used object detection models based on the aggregated object detection models. The commonly used object detection models can be trained by repeating the above process.

According to the configuration shown in FIG. 9, it is possible to efficiently learn facilities to be inspected in a wide area by collecting data from the plurality of moving bodies. In addition, in the configuration, since no data such as the image and the three-dimensional data is transmitted from the moving body to the data center, the commonly used object detection models can be trained while maintaining a confidentiality of data.

For example, when the configuration of the present embodiment is used in an obstacle detection system in front of the moving body, it is better not to transmit a captured image of a person as a main learning target of the object detection unit 3 to the outside of the moving body via a network line from the viewpoint of privacy protection. According to the configuration of the present embodiment, since no data is transmitted to the outside of the moving body, the commonly used object detection models can be trained while protecting privacy of the person to be used for training.

In the configuration shown in FIG. 9, the model distribution unit 12, the model aggregation unit 13, and the model update unit 14 are provided in the data center disposed in a place different from the moving bodies, but these processing units may be provided in one of the plurality of moving bodies so as to share the common object detection models.

As described above, in Embodiment 5 of the present invention, the facility inspection system can be implemented in which the plurality of moving bodies are connected to the data center in the edge cloud configuration, the common object detection models are distributed to the plurality of moving bodies and trained, and the training results are aggregated to update the common object detection models.

In the above-described embodiments, a case in which the present invention is applied to the facility inspection system for inspecting the facility such as a sign has been mainly described, but the present invention may be applied to other applications. For example, the present invention may be applied to the obstacle detection system in front of the moving body described in Embodiment 5. The moving body may be an automobile, a railway vehicle, a streetcar, a drone, and the like.

As described above, the facility inspection system according to embodiments of the present invention includes: the first sensor 1 mounted on a moving body and configured to capture an image of a periphery of a traveling space; the second sensor 2 mounted on the moving body and configured to acquire three-dimensional data of the periphery of the traveling space; the facility database 5 configured to store dimension data of one or more types of facilities to be inspected; the labeled training information creation unit 4 configured to create labeled training information by specifying a region matching with the dimension data from the three-dimensional data; the object detection unit 3 configured to input the captured image to an object detection model and output a name and a region of each of the facilities to be inspected; and the learning unit 6 configured to learn, using at least the three-dimensional data, an internal parameter of the object detection model such that an output result of the object detection unit approaches the labeled training information, so that the labeled training information to be used for object detection can be automatically created by specifying the region matching with the dimension data of the facility from the three-dimensional data of the traveling space.

In addition, since the facility to be inspected is detected from the image captured by the first sensor 1 after the learning of the learning unit 6 is completed, a state of the periphery of the moving body is grasped using only the first sensor 1 in the operation phase, and the present system after completion of learning can be mounted on many moving bodies while reducing a cost, thereby enabling facility inspection over a wide area.

In addition, the facility inspection system further includes: the position information acquisition unit 7 configured to acquire current position information of the moving body; and the labeled training information creation method control unit 8 configured to supply information on the facility to be inspected to the labeled training information creation unit 4, and the labeled training information creation method control unit 8 is configured to acquire the dimension data and arrangement location information of the facility to be inspected from the facility database 5, compare the acquired arrangement location information with the current position information of the moving body, and supply the information on the facility to be inspected to the labeled training information creation unit 4 at a timing at which the moving body approaches a location at which the facility to be inspected is present, so that it is possible to stop an operation of the labeled training information creation unit 4 at a position at which no facility is present, reduce the power consumption when the labeled training information is created, and reduce creation of erroneous labeled training information.

In addition, the facility inspection system further includes: the position information acquisition unit 7 configured to acquire current position information of the moving body; the second sensor database 9 configured to store the three-dimensional data acquired by the second sensor 2 and the position information of the moving body in association with each other; and the interpolation unit 10 configured to read out the three-dimensional data acquired in the past from the second sensor database 9, interpolate the current three-dimensional data using the three-dimensional data acquired in the past at the same location, and output the interpolated three-dimensional data, so that the three-dimensional data acquired at the current time point can be interpolated using the three-dimensional data acquired in the past at the same location, and a spatial measurement resolution of three-dimensional data to be used for creating the labeled training information can be improved.

In addition, the facility inspection system further includes: the traveling space recognition unit 11 configured to recognize the traveling space of the moving body from the image captured by the first sensor 1, and calculate a region at which the facility to be inspected is capable of being present based on the recognized traveling space, and the labeled training information creation unit 4 is configured to read data from the facility database 5, and create the labeled training information by specifying, in the three-dimensional data acquired by the second sensor 2, the region matching with the dimension data of the facility to be inspected from the region that is calculated by the traveling space recognition unit 11 and at which the facility to be inspected is capable of being present, so that the traveling space of the moving body is recognized from the image, and the region in the three-dimensional data at which the facility to be inspected is capable of being present is limited based on the traveling space, and therefore, a processing time when the labeled training information is created can be shortened, and the creation of erroneous labeled training information can be reduced.

In addition, the moving body is a railway vehicle, and the moving body travels at the same position every day, so that data of the same scene can be repeatedly acquired and high-quality labeled training information can be created.

In addition, the moving body is a railway vehicle, and the traveling space recognition unit 11 is configured to detect a track from the image captured by the first sensor 1 and recognize the traveling space of the moving body, so that the traveling space can be reliably recognized and the creation of erroneous labeled training information can be reduced.

In addition, a state determination system includes: the state determination device (moving body); and a center device (data center), the center device includes: the model distribution unit 12 configured to distribute the object detection models commonly used in the object detection units of a plurality of the moving bodies to the object detection units of the respective moving bodies; the model aggregation unit 13 configured to aggregate all of the object detection models trained in the plurality of moving bodies or a difference generated by update due to the training; and the model update unit 14 configured to update the commonly used object detection models based on the aggregated object detection models, and the object detection unit 3 of the moving body is configured to output the name and the region of the facility to be inspected using the object detection model distributed by the model distribution unit 12, training results of the respective moving bodies can be aggregated to update the common object detection models, and the facility to be inspected in a wide area can be efficiently learned.

The present invention is not limited to the embodiments described above, and includes various modifications and equivalent configurations within the spirit of the appended claims. For example, the embodiments described above have been described in detail for easy understanding of the present invention, and the present invention is not necessarily limited to those having all the configurations described above. In addition, a part of a configuration of a certain embodiment may be replaced with a configuration of another embodiment. In addition, the configuration of the other embodiment may be added to the configuration of the certain embodiment. In addition, a part of a configuration of each embodiment may be added to, deleted from, and replaced with another configuration.

In addition, a part or all of the configurations, functions, processing units, processing methods described above or the like may be implemented by hardware, for example by designing an integrated circuit, or may be implemented by software by a processor interpreting and executing a program for implementing each function.

Information such as a program, a table, and a file that implements each function can be stored in a storage device such as a memory, a hard disk, and a solid state drive (SSD), or a recording medium such as an IC card, an SD card, and a DVD.

In addition, control lines and information lines indicate what is considered necessary for description, and not all the control lines and the information lines necessary for implementation are shown. In practice, it may be considered that almost all the configurations are connected to one another.

## Claims

1. A state determination device comprising:
a first sensor (1) mounted on a moving body and configured to capture an image of a periphery of a traveling space in which the moving body travels;
a second sensor (2) mounted on the moving body and configured to acquire three-dimensional data of the periphery of the traveling space;
a facility database (5) configured to store a name and dimension data including a position of one or more types of facilities to be inspected;
a labeled training information creation unit (4) configured to read the facility database (5) , and specify a region of the acquired three-dimensional data matching with the dimension data of a facility and create labeled training information based on the image and the three-dimensional data in the specified region, the labelled training information including a name of a facility in the specified region from the facility database (5);
an object detection unit (3) configured to input the captured image to an object detection model and output a name and a region of each of the facilities to be inspected; and
a learning unit (6) configured to update, using the image and the three-dimensional data in the specified region, an internal parameter of the object detection model such that an output result of the object detection unit (3) approaches the labeled training information.

2. The state determination device according to claim 1, wherein
after completion of the updating by the learning unit (6), the facility to be inspected is detected from the image captured by the first sensor (1).

3. The state determination device according to claim 1, further comprising:
a position information acquisition unit (7) configured to acquire current position information of the moving body; and
a labeled training information creation method control unit (8) configured to supply information on the facility to be inspected to the labeled training information creation unit (4), wherein
the labeled training information creation method control unit (8) is configured to acquire the dimension data and arrangement location information of the facility to be inspected from the facility database (5), compare the acquired arrangement location information with the current position information of the moving body, and supply the information on the facility to be inspected to the labeled training information creation unit (4) at a timing at which the moving body approaches a location at which the facility to be inspected is present.

4. The state determination device according to claim 1, further comprising:
a position information acquisition unit (7) configured to acquire current position information of the moving body;
a second sensor database (9) configured to store the three-dimensional data acquired by the second sensor (2) and the position information of the moving body in association with each other; and
an interpolation unit (10) configured to read out the three-dimensional data acquired in the past from the second sensor database (9), interpolate the current three-dimensional data using the three-dimensional data acquired in the past at the same location, and output the interpolated three-dimensional data.

5. The state determination device according to claim 1, further comprising:
a traveling space recognition unit (11) configured to recognize the traveling space of the moving body from the image captured by the first sensor (1), and calculate a region at which the facility to be inspected is capable of being present based on the recognized traveling space, wherein
the labeled training information creation unit (4) is configured to read data from the facility database (5), and create the labeled training information by specifying, in the three-dimensional data acquired by the second sensor (2), the region matching with the dimension data of the facility to be inspected from the region that is calculated by the traveling space recognition unit (11) and at which the facility to be inspected is capable of being present.

6. The state determination device according to claim 1, wherein
the moving body is a railway vehicle.

7. The state determination device according to claim 5, wherein
the moving body is a railway vehicle, and
the traveling space recognition unit (11) is configured to detect a track from the image captured by the first sensor (1) and recognize the traveling space of the moving body.

8. A state determination system comprising:
the state determination device according to any one of claims 1 to 7; and
a center device communicably connected to the state determination device, wherein
the center device includes:
a model distribution unit (12) configured to distribute the object detection models commonly used in the object detection units in a plurality of the moving bodies to the object detection units of the respective moving bodies;
a model aggregation unit (13) configured to aggregate all of the object detection models trained in the plurality of moving bodies or a difference generated by update due to the training; and
a model update unit (14) configured to update the commonly used object detection models based on the aggregated object detection models, and
the object detection unit (3) of the state determination device is configured to output the name and the region of the facility to be inspected using the object detection model distributed by the model distribution unit (12).

9. A state determination method to be executed by a computer,
the computer including an arithmetic unit configured to execute a predetermined process, a storage device connected to the arithmetic unit, and a facility database (5) configured to store a name and dimension data including a position, of one or more types of facilities to be inspected,
the state determination method comprising the arithmetic unit executing:
a step of acquiring data from a first sensor (1) mounted on a moving body and configured to capture an image of a periphery of a traveling space in which the moving body travels;
a step of acquiring data from a second sensor (2) mounted on the moving body and configured to acquire three-dimensional data of the periphery of the traveling space;
a labeled training information creation step of reading the facility database (5), and specifying a region of the three-dimensional data matching with the dimension data of a facility and creating labeled training information based on the image and the three-dimensional data in the specified region, the labelled training information including a name of a facility in the specified region from the facility database (5);
an object detection step of inputting the captured image to an object detection model and outputting a name and a region of each of the facilities to be inspected; and
a learning step of updating, using the image and the three-dimensional data in the specified region, an internal parameter of the object detection model such that an output result of the object detection step approaches the labeled training information.

## Patentansprüche

1. Zustandsbestimmungsvorrichtung, die Folgendes umfasst:
einen ersten Sensor (1), der auf einem sich bewegenden Körper befestigt und ausgelegt ist, ein Bild der Umgebung eines Fortbewegungsraums aufzunehmen, in dem sich der sich bewegende Körper fortbewegt;
einen zweiten Sensor (2), der auf dem sich bewegenden Körper befestigt und ausgelegt ist, dreidimensionale Daten der Umgebung des Fortbewegungsraums zu erfassen;
eine Einrichtungsdatenbank (5), die ausgelegt ist, Namen und Abmessungsdaten, einschließlich der Position, einer oder mehrerer Arten von zu prüfenden Einrichtungen zu speichern;
eine Einheit zur Erzeugung markierter Trainingsinformationen (4), die ausgelegt ist, die Einrichtungsdatenbank (5) auszulesen und einen Bereich der erfassten dreidimensionalen Daten zu spezifizieren, die mit den Abmessungsdaten einer Einrichtung übereinstimmen, und basierend auf dem Bild und den dreidimensionalen Daten im spezifizierten Bereich markierte Trainingsinformationen zu erzeugen, wobei die markierten Trainingsinformationen den Namen einer Einrichtung im spezifizierten Bereich der Einrichtungsdatenbank (5) umfassen;
eine Objektdetektionseinheit (3), die ausgelegt ist, das aufgenommene Bild in ein Objektdetektionsmodell einzugeben und einen Namen und einen Bereich jeder der zu prüfenden Einrichtungen auszugeben; und
eine Lerneinheit (6), die ausgelegt ist, einen internen Parameter des Objektdetektionsmodells so unter Verwendung des Bilds und der dreidimensionalen Daten im spezifizierten Bereich zu aktualisieren, dass ein Ausgabeergebnis der Objektdetektionseinheit (3) sich den markierten Trainingsinformationen annähert.

2. Zustandsbestimmungsvorrichtung nach Anspruch 1, wobei
nach Beendigung der Aktualisierung durch die Lerneinheit (6) die zu prüfende Einrichtung in dem durch den ersten Sensor (1) aufgenommenen Bild detektiert wird.

3. Zustandsbestimmungsvorrichtung nach Anspruch 1, die weiters Folgendes umfasst:
eine Positionsinformationenerfassungseinheit (7), die ausgelegt ist, aktuelle Positionsinformationen des sich bewegenden Körpers zu erfassen; und
eine Einheit zu Steuerung eines Verfahrens zur Erzeugung von markierten Trainingsinformationen (8), die ausgelegt ist, die Einheit zur Erzeugung markierter Trainingsinformationen (4) mit Informationen über die zu prüfende Einrichtung zu versorgen, wobei
die Einheit zu Steuerung eines Verfahrens zur Erzeugung von markierten Trainingsinformationen (8) ausgelegt ist, die Abmessungsdaten und Anordnungsstandortinformationen der zu prüfenden Einrichtung aus der Einrichtungsdatenbank (5) zu erfassen, die erfassten Anordnungsstandortinformationen mit den aktuellen Positionsinformationen des sich bewegenden Körpers zu vergleichen und die Informationen über die zu prüfende Einrichtung der Einheit zur Erzeugung markierter Trainingsinformationen (4) zu einem Zeitpunkt bereitzustellen, zu dem sich der sich bewegende Körper einem Standort nähert, an dem die zu prüfende Einrichtung vorhanden ist.

4. Zustandsbestimmungsvorrichtung nach Anspruch 1, die weiters Folgendes umfasst:
eine Positionsinformationenerfassungseinheit (7), die ausgelegt ist, aktuelle Positionsinformationen des sich bewegenden Körpers zu erfassen;
eine zweite Sensordatenbank (9), die ausgelegt ist, die durch den zweiten Sensor (2) erfassten dreidimensionalen Daten und die Positionsinformationen des sich bewegenden Körpers in Verbindung miteinander zu speichern; und
eine Interpolationseinheit (10), die ausgelegt ist, die in der Vergangenheit von der zweiten Sensordatenbank (9) erfassten dreidimensionalen Daten auszulesen, die aktuellen dreidimensionalen Daten unter Verwendung der in der Vergangenheit am selben Standort erfassten dreidimensionalen Daten zu interpolieren und die interpolierten dreidimensionalen Daten auszugeben.

5. Zustandsbestimmungsvorrichtung nach Anspruch 1, die weiters Folgendes umfasst:
eine Fortbewegungsraumerkennungseinheit (11), die ausgelegt ist, den Fortbewegungsraum des sich bewegenden Körpers in dem vom ersten Sensor (1) aufgenommenen Bild zu erkennen und basierend auf dem erkannten Fortbewegungsraum einen Bereich zu berechnen, in dem die zu prüfende Einrichtung vorhanden sein kann, wobei
die Einheit zur Erzeugung markierter Trainingsinformationen (4) ausgelegt ist, Daten aus der Einrichtungsdatenbank (5) auszulesen und die markierten Trainingsinformationen durch Spezifizieren, in den vom zweiten Sensor (2) erfassten dreidimensionalen Daten, des Bereichs, der mit den Abmessungsdaten der zu prüfenden Einrichtung übereinstimmt, aus dem Bereich, der von der Fortbewegungsraumerkennungseinheit (11) berechnet wird und in dem die zu prüfende Einrichtung vorhanden sein kann, zu erzeugen.

6. Zustandsbestimmungsvorrichtung nach Anspruch 1, wobei
der sich bewegende Körper ein Schienenfahrzeug ist.

7. Zustandsbestimmungsvorrichtung nach Anspruch 5, wobei
der sich bewegende Körper ein Schienenfahrzeug ist und
die Fortbewegungsraumerkennungseinheit (11) ausgelegt ist, ein Gleis in dem vom ersten Sensor (1) aufgenommen Bild zu detektieren und den Fortbewegungsraum des sich bewegenden Körpers zu erkennen.

8. Zustandsbestimmungssystem, das Folgendes umfasst:
eine Zustandsbestimmungsvorrichtung nach einem der Ansprüche 1 bis 7; und
eine zentrale Vorrichtung, die kommunikationsfähig mit der Zustandsbestimmungsvorrichtung verbunden ist, wobei
die zentrale Vorrichtung Folgendes umfasst:
eine Modellverteilungseinheit (12), die ausgelegt ist, die Objektdetektionsmodelle, die gemeinsam in den Objektdetektionseinheiten einer Vielzahl von sich bewegenden Körpern verwendet werden, auf die Objektdetektionseinheiten der entsprechenden sich bewegenden Körper zu verteilen;
eine Modellaggregationseinheit (13), die ausgelegt ist, alle Objektdetektionsmodelle, die in der Vielzahl von sich bewegenden Körpern trainiert werden, oder einen durch eine Aktualisierung aufgrund des Trainings erzeugen Unterschied zu aggregieren; und
eine Modellaktualisierungseinheit (14), die ausgelegt ist, die gemeinsam verwendeten Objektdetektionsmodelle basierend auf den aggregierten Objektdetektionsmodellen zu aktualisieren, und
die Objektdetektionseinheit (3) der Zustandsbestimmungsvorrichtung ausgelegt ist, den Namen und den Bereich der zu prüfenden Einrichtung unter Verwendung des durch die Modellverteilungseinheit (12) verteilten Objektdetektionsmodells auszugeben.

9. Zustandsbestimmungsverfahren, das von einem Computer ausgeführt wird, wobei
der Computer eine Arithmetikeinheit, die ausgelegt ist, einen vorbestimmten Prozess auszuführen, eine Speichervorrichtung, die mit der Arithmetikeinheit verbunden ist, und eine Einrichtungsdatenbank (5), die ausgelegt ist, Namen und Abmessungsdaten, einschließlich der Position, einer oder mehrerer Arten von zu prüfenden Einrichtungen zu speichern;
wobei das Zustandsbestimmungsverfahren die Arithmetikeinheit umfasst und Folgendes ausführt:
einen Schritt des Erfassens von Daten von einem ersten Sensor (1), der auf einem sich bewegenden Körper befestigt und ausgelegt ist, ein Bild der Umgebung eines Fortbewegungsraums aufzunehmen, in dem sich der sich bewegende Körper fortbewegt;
einen Schritt des Erfassens von Daten von einem zweiten Sensor (2), der auf dem sich bewegenden Körper befestigt und ausgelegt ist, dreidimensionale Daten der Umgebung des Fortbewegungsraums zu erfassen;
einen Schritt des Erzeugens markierter Trainingsinformationen durch Auslesen der Einrichtungsdatenbank (5), des Spezifizierens eines Bereichs der dreidimensionalen Daten, der den Abmessungsdaten einer Einrichtung entspricht, und des Erzeugens von markierten Trainingsinformationen basierend auf dem Bild und den dreidimensionalen Daten im spezifizierten Bereich, wobei die markierten Trainingsinformationen den Namen einer Einrichtung im spezifizierten Bereich der Einrichtungsdatenbank (5) umfassen;
einen Objektdetektionsschritt des Eingebens des aufgenommenen Bilds in ein Objektdetektionsmodell und des Ausgebens des Namens und Bereichs jeder der zu prüfenden Einrichtungen; und
einen Lernschritt des Aktualisierens eines internen Parameters des Objektdetektionsmodells so unter Verwendung des Bilds und der dreidimensionalen Daten im spezifizierten Bereich, dass ein Ausgabeergebnis des Objektdetektionsschritts sich den markierten Trainingsinformationen annähert.

## Revendications

1. Dispositif de détermination d'état, comprenant :
un premier capteur (1) monté sur un corps mobile et configuré pour capturer une image d'une périphérie d'un espace de déplacement dans lequel le corps mobile se déplace ;
un second capteur (2) monté sur le corps mobile et configuré pour acquérir des données tridimensionnelles de la périphérie de l'espace de déplacement ;
une base de données d'équipements (5) configurée pour stocker un nom et des données de dimension incluant une position d'un ou plusieurs types d'équipements à inspecter ;
une unité de création d'informations d'entraînement étiquetées (4) configurée pour lire la base de données d'équipement (5), et spécifier une région des données tridimensionnelles acquises correspondant aux données de dimension d'un équipement et créer des informations d'entraînement étiquetées sur la base de l'image et des données tridimensionnelles dans la région spécifiée, les informations d'entraînement étiquetées incluant un nom d'un équipement dans la région spécifiée à partir de la base de données d'équipement (5) ;
une unité de détection d'objet (3) configurée pour entrer l'image capturée dans un modèle de détection d'objet et pour délivrer en sortie un nom et une région de chacun des équipements à inspecter ; et
une unité d'apprentissage (6) configurée pour mettre à jour, en utilisant l'image et les données tridimensionnelles dans la région spécifiée, un paramètre interne du modèle de détection d'objet de telle sorte qu'un résultat de sortie de l'unité de détection d'objet (3) s'approche des informations d'entraînement étiquetées.

2. Dispositif de détermination d'état selon la revendication 1, dans lequel
après achèvement de la mise à jour par l'unité d'apprentissage (6), l'équipement à inspecter est détecté à partir de l'image capturée par le premier capteur (1).

3. Dispositif de détermination d'état selon la revendication 1, comprenant en outre :
une unité d'acquisition d'informations de position (7) configurée pour acquérir des informations de position actuelle du corps mobile ; et
une unité de commande de procédé de création d'informations d'entraînement étiquetées (8) configurée pour fournir des informations sur l'équipement à inspecter à l'unité de création d'informations d'entraînement étiquetées (4), dans lequel
l'unité de commande de procédé de création d'informations d'entraînement étiquetées (8) est configurée pour acquérir les données de dimension et les informations d'emplacement d'agencement de l'équipement à inspecter à partir de la base de données d'équipement (5), comparer les informations d'emplacement d'agencement acquises avec les informations de position actuelle du corps mobile, et fournir les informations sur l'équipement à inspecter à l'unité de création d'informations d'entraînement étiquetées (4) à un moment où le corps mobile s'approche d'un emplacement où l'équipement à inspecter est présent.

4. Dispositif de détermination d'état selon la revendication 1, comprenant en outre :
une unité d'acquisition d'informations de position (7) configurée pour acquérir des informations de position actuelle du corps mobile ;
une seconde base de données de capteur (9) configurée pour stocker les données tridimensionnelles acquises par le second capteur (2) et les informations de position du corps mobile en association les unes avec les autres ; et
une unité d'interpolation (10) configurée pour lire les données tridimensionnelles acquises dans le passé à partir de la seconde base de données de capteurs (9), interpoler les données tridimensionnelles actuelles en utilisant les données tridimensionnelles acquises dans le passé au même emplacement, et délivrer en sortie les données tridimensionnelles interpolées.

5. Dispositif de détermination d'état selon la revendication 1, comprenant en outre :
une unité de reconnaissance d'espace de déplacement (11) configurée pour reconnaître l'espace de déplacement du corps mobile à partir de l'image capturée par le premier capteur (1), et calculer une région dans laquelle l'équipement à inspecter peut être présent sur la base de l'espace de déplacement reconnu, dans lequel
l'unité de création d'informations d'entraînement étiquetées (4) est configurée pour lire des données à partir de la base de données d'équipement (5), et créer les informations d'entraînement étiquetées en spécifiant, dans les données tridimensionnelles acquises par le second capteur (2), la région correspondant aux données de dimension de l'équipement à inspecter à partir de la région qui est calculée par l'unité de reconnaissance d'espace de déplacement (11) et au niveau de laquelle l'équipement à inspecter est capable d'être présent.

6. Dispositif de détermination d'état selon la revendication 1, dans lequel
le corps mobile est un véhicule ferroviaire.

7. Dispositif de détermination d'état selon la revendication 5, dans lequel
le corps mobile est un véhicule ferroviaire, et
l'unité de reconnaissance d'espace de déplacement (11) est configurée pour détecter une piste à partir de l'image capturée par le premier capteur (1) et pour reconnaître l'espace de déplacement du corps mobile.

8. Système de détermination d'état, comprenant :
le dispositif de détermination d'état selon l'une quelconque des revendications 1 à 7, et
un dispositif central connecté en communication au dispositif de détermination d'état, dans lequel
le dispositif central comprend :
une unité de distribution de modèle (12) configurée pour distribuer les modèles de détection d'objet couramment utilisés dans les unités de détection d'objet dans une pluralité des corps mobiles aux unités de détection d'objet des corps mobiles respectifs ;
une unité d'agrégation de modèles (13) configurée pour agréger tous les modèles de détection d'objet formés dans la pluralité de corps mobiles ou une différence générée par mise à jour en raison de l'entraînement ; et
une unité de mise à jour de modèle (14) configurée pour mettre à jour les modèles de détection d'objet couramment utilisés sur la base des modèles de détection d'objet agrégés, et
l'unité de détection d'objet (3) du dispositif de détermination d'état est configurée pour délivrer en sortie le nom et la région de l'équipement à inspecter en utilisant le modèle de détection d'objet distribué par l'unité de distribution de modèle (12).

9. Procédé de détermination d'état à exécuter par un ordinateur,
l'ordinateur incluant une unité arithmétique configurée pour exécuter un processus prédéterminé, un dispositif de stockage connecté à l'unité arithmétique, et une base de données d'équipement (5) configurée pour stocker un nom et des données de dimension incluant une position, d'un ou plusieurs types d'équipements à inspecter,
le procédé de détermination d'état comprenant l'unité arithmétique exécutant :
une étape d'acquisition de données à partir d'un premier capteur (1) monté sur un corps mobile et configuré pour capturer une image d'une périphérie d'un espace de déplacement dans lequel le corps mobile se déplace ;
une étape d'acquisition de données à partir d'un second capteur (2) monté sur le corps mobile et configuré pour acquérir des données tridimensionnelles de la périphérie de l'espace de déplacement ;
une étape de création d'informations d'entraînement étiquetées consistant à lire la base de données d'équipement (5), et à spécifier une région des données tridimensionnelles correspondant aux données de dimension d'un équipement et à créer des informations d'entraînement étiquetées sur la base de l'image et des données tridimensionnelles dans la région spécifiée, les informations d'entraînement étiquetées incluant un nom d'un équipement dans la région spécifiée à partir de la base de données d'équipement (5) ;
une étape de détection d'objet consistant à entrer l'image capturée dans un modèle de détection d'objet et à délivrer en sortie un nom et une région de chacune des équipements à inspecter ; et
une étape d'apprentissage consistant à mettre à jour, en utilisant l'image et les données tridimensionnelles dans la région spécifiée, un paramètre interne du modèle de détection d'objet de sorte qu'un résultat de sortie de l'étape de détection d'objet s'approche des informations d'entraînement étiquetées.
